Europäisches Patentamt

European Patent Office

Office européen des brevets

(19)

(11) Numéro de publication: **0 148 521**
**B1**

(12) **FASCICULE DE BREVET EUROPEEN**

(45) Date de publication du fascicule du brevet:
31.01.90

(21) Numéro de dépôt: **84201767.5**

(22) Date de dépôt: **30.11.84**

(51) Int. Cl.⁴: **C 08 G 18/08,** C 08 J 9/00,
C 04 B 28/02

(54) Procédé pour la fabrication d'un matériau cellulaire à partir d'un prépolymère de polyisocyanate organique et d'un additif capable de fixer de l'eau, matériau cellulaire obtenu par le procédé et composition de matières pour l'obtention d'un matériau cellulaire au moyen dudit procédé.

(30) Priorité: **12.12.83 FR 8319982**

(43) Date de publication de la demande:
**17.07.85 Bulletin 85/29**

(45) Mention de la délivrance du brevet:
**31.01.90 Bulletin 90/5**

(84) Etats contractants désignés:
**AT BE CH DE FR GB IT LI LU NL SE**

(56) Documents cités:
FR-A- 2 219 962
US-A- 3 240 736

P. WRIGHT et al.: "Solid polyurethane elastomers",
pages 122-126, Elsevier Publishing Company,
Amsterdam, NL.

(73) Titulaire: **SOLVAY & Cie (Société Anonyme), Rue du Prince Albert, 33, B-1050 Bruxelles (BE)**

(72) Inventeur: **Dehennau, Claude, Chemin des Postes, 236, B-1410 Waterloo (BE)**

(74) Mandataire: **Anthoine, Paul et al, SOLVAY & Cie Département de la Propriété Industrielle 310, rue de Ransbeek, B-1120 Bruxelles (BE)**

ACTORUM AG

**Description**

La présente invention concerne un procédé pour la fabrication d'un matériau cellulaire utilisable notamment dans l'industrie du bâtiment ou en emballage, par réaction d'un prépolymère de polyisocyanate organique avec de l'eau et un additif capable de fixer l'eau.

On sait que l'on peut préparer des matériaux cellulaires ou des mousses de polyuréthane à partir de diisocyanates ou de polyisocyanates et de polyéthers ou de polyesters comportant des groupes hydroxyle terminaux. Ce procédé connu (Encyclopedia of Polymer Science and Technology – vol. 11 – 1969 – John Wiley and Sons, Inc. – pages 537 à 545) met en œuvre divers constituants ou réactifs auxiliaires, notamment des charges minérales, des agents tensioactifs, des catalyseurs, des agents porogènes tels que les hydrocarbures fluorés FREON, des fluidifiants, etc. (voir aussi KIRK-OTHMER – Encyclopedia of Chemical Technology – vol. 11 – 1980 –3ème édition – John Wiley and Sons, Inc. – pages 87 à 89). Il existe deux techniques différentes pour fabriquer les mousses de polyuréthane, l'une appelée technique en une étape, qui consiste à mélanger simultanément tous les ingrédients, l'autre appelée technique au prépolymère, qui consiste à préparer un prépolymère ou un semi-prépolymère par réaction d'un polyéther ou d'un polyester à groupes hydroxyle terminaux avec un excès de diisocyanate.

Le prépolymère ainsi fabriqué est disponible dans le commerce; il comprend des groupes isocyanate réactifs terminaux qui permettent de le faire réagir avec de l'eau pour former la mousse. Certains prépolymères sont dissous dans un grand excès de diisocyanate et ont dès lors une très grande réactivité.

La présente invention se rapporte à la technique au prépolymère.

On connaît un procédé pour fabriquer des matériaux cellulaires, du type des bétons mousse utilisables dans l'industrie du bâtiment selon lequel on mélange en proportions adéquates un prépolymère de polyisocyanate, un liant hydraulique (généralement du ciment Portland), un catalyseur pour le prépolymère, un agent tensioactif, un agent porogène, un fluidifiant et éventuellement des charges minérales (Brevets BE-A-811 622 et BE-A-828 997 de BAYER A. G., demande de brevet PCT/DE79/00 118 de REUTER TECHNOL.).

Dans ce procédé connu, on réalise d'abord des prémélanges distincts avec les divers constituants du mélange, puis on réunit les prémélanges. Dans les exemples d'application pratique, on incorpore le liant hydraulique avec le prépolymère ou le catalyseur dans un même prémélange. Les matériaux cellulaires qui en résultent présentent généralement l'inconvénient d'avoir une masse volumique apparente, trop élevée, qui nuit à leur utilisation pour l'isolation thermique ou phonique ou dans des emballages.

L'invention remédie à cet inconvénient en fournissant un procédé qui permette, au départ des mêmes constituants, d'obtenir des matériaux cellulaires de masse volumique apparente plus faible et qui, de ce fait, conviennent bien en tant que matériaux d'emballage ou pour l'isolation phonique et thermique des bâtiments.

L'invention concerne dès lors un procédé pour la fabrication d'un matériau cellulaire par réaction d'un prépolymère de polyisocyanate organique avec de l'eau en présence d'un additif capable de fixer de l'eau, d'un catalyseur pour le prépolymère, d'un agent tensioactif, d'un agent porogène, éventuellement d'un fluidifiant et éventuellement de charge minérales supplémentaires, au départ de prémélanges particuliers de ces constituants; selon l'invention, on réalise d'abord au moins deux prémélanges tels que le prépolymère de polyisocyanate organique, d'une part, et l'additif capable de fixer de l'eau, d'autre part, soient dans des prémélanges différents, le catalyseur et le prépolymère étant dans un même prémélange, on incorpore ensuite l'eau au prémélange contenant l'additif capable de fixer de l'eau, puis on réunit les prémélanges.

Dans le procédé selon l'invention, les prépolymères de polyisocyanate organique mis en œuvre sont obtenus par réaction d'un polyester ou d'un polyéther à groupes hydroxyle terminaux avec un diisocyanate ou un polyisocyanate, comme exposé plus haut. Le plus souvent les polyesters sont des adipates de diols et de triols tandis que les polyéthers sont des produits d'addition d'oxyde de propylène à des diols, des triols ou des alcools à fonctionnalité plus élevée ou encore à des polyamines. D'autres prépolymères réactifs susceptibles d'être utilisées sont bien connus en soi et sont notamment énumérés dans les brevets belges 811 622 et 828 997 déjà cités.

Parmi les diisocyanates utilisés pour réagir avec les polyesters ou polyéthers à groupes hydroxyle terminaux, les plus courants sont le diisocyanate de tolylène (TDI) et le diisocyanate de méthylènediphénylène (MDI) préparé par condensation aniline-formaldéhyde suivie de phosgénation. D'autres di- ou polyisocyanates pouvant être utilisés sont également mentionnés dans les brevets belges 811 622 et 828 997.

A titre d'additifs capables de fixer de l'eau on utilise de préférence des matières inorganiques à propriétés de liant hydraulique, principalement les ciments hydrauliques, l'anhydrite synthétique, le plâtre et la chaux calcinée. Comme ciment hydraulique on peut citer le ciment Portland, le ciment de maçonnerie, le ciment pouzzolanique, le ciment à prise rapide, le ciment de haut fourneau, le ciment à la chaux, le ciment au sulfate de calcium et le ciment séléniteux. Le ciment Portland est tout spécialement approprié.

On peut aussi employer, en supplément, d'autres matières de charge minérales telles que du sable, de l'alumine, des silicates d'aluminium, de la magnésie, de l'amiante, des fibres de verre, des fibres cellulosiques et de la laine de roche.

Pour optimaliser le contact entre la résine de polyuréthane et les charges minérales, y compris le liant hydraulique, il est avantageux d'utiliser un fluidifiant. La caséine donne à ce sujet des résultats remarquables. Bien entendu, l'emploi d'un autre fluidifiant n'est nullement exclu de la portée de l'invention.

Le catalyseur a pour fonction d'initier la polymérisation du prépolymère. On peut utiliser tout catalyseur adéquat connu. Il s'agit le plus souvent d'amines tertiaires, comme la triéthylamine, la N-éthylmorpholine, la N-cocomorpholine, la N-éthyldiéthanolamine, la N,N-diméthylcyclohexylamine, la N,N-diméthylbenzylamine, ou de dérivés d'hexahydrotriazine comme la N,N',N''-(ω-diméthylamino-n-propyl)-hexahydrotriazine. On utilise aussi quelquefois des composés organométalliques, comme le dilaurate de dibutyl-étain, éventuellement en combinaison avec une amine tertiaire.

L'agent tensioactif a pour fonction de stabiliser le matériau cellulaire et de régulariser les dimensions des pores. On peut employer de nombreuses espèces d'agents tensioactifs, en général des agents non ioniques et ioniques et des dérivés de silicone solubles dans l'eau tels que des copolymères à blocs de polyoxyalkylène-polydiméthylsiloxane qui donnent des mousses uniformes. Ce dernier type d'agent tensioactif est spécialement avantageux.

L'agent porogène a pour fonction de conférer au matériau son caractère cellulaire. Dans le cadre du procédé selon l'invention l'emploi d'hydrocarbures halogénés est spécialement conseillé. Le trichlorofluorométhane est d'usage courant dans ce domaine, mais d'autres produits de ce genre peuvent être mis en œuvre.

En général le mélange des ingrédients peut se faire à température ambiante, mais des températures de −20 à +80°C sont tolérables.

Le procédé selon l'invention s'accomode d'une quantité relative importante de l'additif capable de fixer de l'eau tel que du ciment hydraulique; cette quantité peut aller jusqu'à 1000 parties en poids d'additif capable de fixer de l'eau et même audelà, pour 100 parties en poids de prépolymère de polyisocyanate. En pratique, il est toutefois recommandé que la quantité relative de l'additif capable de fixer de l'eau n'excède pas 800 parties en poids pour 100 parties en poids du prépolymère; dans le cas de ciment hydraulique, on obtient généralement de bons résultats avec des quantités relatives comprises entre 200 et 800 parties en poids de ciment pour 100 parties en poids du prépolymère, les quantités relatives comprises entre 400 et 600 parties en poids étant préférées. Le prépolymère de polyisocyanate est alors choisi de préférence de manière à réaliser un rapport «groupes isocyanates libres (NCO)/ciment» compris dans la fourchette 0,05 ± 0,02, de préférence 0,05 ± 0,015.

Dans une forme de réalisation spécialement avantageuse du procédé selon l'invention, on met en œuvre:
— 200 à 800 parties en poids de l'additif capable de fixer de l'eau, pour 100 parties en poids du prépolymère de polyisocyanate;
— 50 à 70 parties en poids d'eau pour 100 parties en poids de l'additif capable de fixer de l'eau;
— 0,10 à 0,50 partie en poids de fluidifiant pour 100 parties en poids du mélange formé par le prépolymère de polyisocyanate, l'additif capable de fixer de l'eau, le catalyseur, l'agent tensioactif, l'agent porogène, le fluidifiant et les charges minérales supplémentaires éventuelles;
— 1 à 3 parties en poids d'agent tensioactif pour 100 parties en poids du dit mélange;
— 0,10 à 0,60 partie en poids de catalyseur pour 100 parties en poids du dit mélange;
— 2 à 5 parties en poids d'agent porogène pour 100 parties en poids du dit mélange.

Dans la mise en œuvre du procédé selon l'invention, on réalise d'abord séparément les prémélanges, puis on réunit les prémélanges au moment choisi, généralement sur les lieux de fabrication du matériau cellulaire.

Suivant une forme générale d'exécution du procédé selon l'invention, on utilise deux prémélanges dont l'un contient le prépolymère de polyisocyanate organique, le catalyseur, l'agent tensioactif et l'agent porogène et dont l'autre contient l'additif capable de fixer de l'eau, le fluidifiant éventuel et les charges minérales supplémentaires éventuelles et on procède à l'addition de l'eau au prémélange contenant l'additif capable de fixer de l'eau et à la réunion des deux prémélanges au moment et à l'endroit choisis pour la production du matériau cellulaire.

Suivant une autre forme d'exécution du procédé selon l'invention, particulièrement adaptée pour assurer une bonne stabilité des divers ingrédients lors du stockage précédant l'utilisation, on réalise d'abord séparément, d'une part, un premier prémélange contenant l'additif capable de fixer de l'eau, le fluidifiant éventuel et les charges minérales supplémentaires éventuelles et, d'autre part, un second prémélange contenant l'agent tensioactif, l'agent porogène et le prépolymère de polyisocyanate, ou le catalyseur, on ajoute le catalyseur, ou le prépolymère, au second prémélange, on ajoute l'eau au premier prémélange puis on réunit les deux prémélanges.

Toutes autres choses égales, le procédé selon l'invention permet d'obtenir des matériaux cellulaires qui ont une masse volumique apparente remarquablement basse et qui sont ininflammables et hydrophobes.

L'invention concerne dès lors aussi un tel matériau cellulaire obtenu par le procédé selon l'invention. Grâce à sa masse volumique apparente remarquablement basse et sa grande homogénéité, le matériau cellulaire selon l'invention présente de bonnes propriétés d'isolation phonique et thermique et il trouve de ce fait une application intéressante dans l'industrie du bâtiment. On peut le mettre en œuvre sous toute forme compatible avec sa destination, par exemple sous la forme de panneaux, de blocs, de tubes et de poutres. On peut éventuellement le renforcer au moyen d'armatures pour lui conférer des propriétés de résistance mécanique plus élevées.

L'invention concerne aussi une composition de matières pour l'obtention d'un matériau cellulaire au moyen du procédé selon l'invention, ladite composition de matières comprenant au moins deux prémélanges de matières qui comprennent un prépolymère de polyisocyanate organique, un additif capable de fixer de l'eau, un catalyseur pour le prépolymère, un agent tensioactif, un agent porogène et éventuellement un fluidifiant et des charges minérales supplémentaires, l'additif capable de fixer de l'eau, d'une part, et le prépolymère et le catalyseur, d'autre part, se trouvant dans des prémélanges différents.

La composition de matières selon l'invention peut être constituée de deux prémélanges différents, ou, en variante, elle peut comprendre un nombre de prémélanges différents, supérieurs à deux. Dans une forme de réalisation préférée de l'invention, la composition de matières comprend au moins trois prémélanges différents et l'additif capable de fixer l'eau, le catalyseur et le prépolymère se trouvent respectivement dans trois prémélanges différents.

Les prémélanges selon l'invention présentent une bonne stabilité au stockage et ils de prêtent dès lors facilement à la commercialisation. Au moment voulu pour la fabrication d'un matériau cellulaire, il suffit d'ajouter de l'eau au prémélange contenant l'additif capable de fixer de l'eau, puis de réunir les prémélanges.

Afin de faire ressortir les avantages de l'invention, on a réalisé divers essais effectués, d'une part, selon l'invention et, d'autre part, selon le mode opératoire des brevets BE-A-811 622 et BE-A-838 997 de BAYER A. G., c'est-à-dire en incluant respectivement le catalyseur dans le prémélange contenant le prépolymère de polyuréthane et dans le prémélange contenant l'additif capable de fixer de l'eau, en l'occurrence du ciment Portland. Certains essais effectués selon les brevets BAYER comportent, comme indiqué dans ces brevets, du ciment dans les deux prémélanges.

Pour ces essais on a utilisé les ingrédients suivants:

– Résine de polyuréthane EKANATE TS (marque déposée de la société Produits Chimiques Ugine-Kuhlmann; il s'agit de prépolymères à base de polyéthers polyols et de diisocyanate de tolylène), la résine étant choisie de façon à conserver un rapport «NCO libre/ciment» compris dans la fourchette 0,05 ± 0,01.
– Agent tensioactif: copolymère de polyoxyalkylène-polydiméthylsiloxane
– Catalyseur: N,N-diméthylcyclohexylamine
– Agent porogène: trichloromonofluorméthane
– Ciment: ciment Portland P 40
– Fluidifiant: caséine.

On a travaillé à température ambiante. Le temps de prise n'a été dans tous les cas que de quelques secondes.

Les résultats comparatifs sont donnés au tableau ci-après où les quantités sont exprimées en parties en poids:

| Compositions | | Mélanges selon l'invention | | | | Mélanges selon le procédé des brevets BE-A-811 622 et BE-A-828 997 | | |
|---|---|---|---|---|---|---|---|---|
| | 1 | 2 | 3 | 4 | I | II | III | |
| Prémélange A | Résine | 100 | 100 | 100 | 100 | 100 | 100 | 100 |
| | Tensioactif | 15 | 15 | 15 | 15 | 15 | 15 | 15 |
| | Catalyseur | 4 | 2 | 4 | 2 | 4 | – | – |
| | Porogène | 35 | 40 | 35 | 35 | 35 | 35 | 35 |
| | Ciment | – | – | – | – | 200 | 200 | – |
| Prémélange B | Ciment | 400 | 600 | 500 | 500 | 200 | 200 | 400 |
| | Eau | 250 | 375 | 300 | 300 | 250 | 250 | 250 |
| | Caséine | 2 | 2 | 2 | 2 | 2 | 2 | 2 |
| | Catalyseur | – | – | – | – | – | 4 | 4 |
| Masse volumique apparente, kg/m³ | | 140 | 155 | 160 | 140 | 1150 | 395 | 430 |

Un essai réalisé avec les compositions de l'exemple 1 mais en supprimant la caséine a donné un matériau cellulaire ayant une masse volumique apparente de 355 kg/m³, valeur supérieure à celle des produits avec caséine, bien qu'inférieure à celle des produits fabriqués selon le procédé de Bayer.

L'examen du tableau montre que l'application du procédé selon l'invention permet d'augmenter la proportion de ciment dans le matériau tout en donnant un produit ayant une masse volumique apparente beaucoup moins élevée, de l'ordre d'environ 150 kg/m³ à comparer à une valeur de 400–1150 kg/m³ pour le procédé selon l'art antérieur.

**Revendications**

1. Procédé pour la fabrication d'un matériau cellulaire par réaction d'un prépolymère de polyisocyanate organique avec de l'eau en présence d'un additif capable de fixer de l'eau, d'un catalyseur pour le prépolymère, d'un agent tensioactif, d'un agent porogène, éventuellement d'un fluidifiant et éventuellement de charges minérales supplémentaires, au départ de prémélanges particuliers de ces constituants, caractérisé en ce qu'on réalise d'abord au moins deux prémélanges tels que le prépolymère de polyisocyanate organique, d'une part, et l'additif capable de fixer de l'eau, d'autre part, soient dans des prémélanges différents, le catalyseur et le prépolymère étant dans un même prémélange, on incorpore ensuite l'eau au prémélange contenant l'additif capable de fixer de l'eau, puis on réunit les prémélanges.

2. Procédé suivant la revendication 1, caractérisé en ce qu'on utilise deux prémélanges dont l'un contient le prépolymère de polyisocyanate organique, le catalyseur, l'agent tensioactif et l'agent porogène et dont l'autre contient l'additif capable de fixer de l'eau, le fluidifiant éventuel et les charges minérales supplémentaires éventuelles et en ce qu'on procède à l'adjonction de l'eau au prémélange contenant l'additif capable de fixer de l'eau et à la réunion des deux prémélanges au moment et à l'endroit choisis pour la production du matériau cellulaire.

3. Procédé suivant la revendication 1 ou 2, caractérisé en ce qu'on réalise d'abord séparément, d'une part, un premier prémélange contenant l'additif capable de fixer de l'eau, le fluidifiant éventuel et les charges minérales supplémentaires éventuelles et, d'autre part, un second prémélange contenant l'agent tensioactif, l'agent porogène et le prépolymère de polyisocyanate, ou le catalyseur, on ajoute le catalyseur ou le prépolymère, au second prémélange, on ajoute l'eau au premier prémélange, puis on réunit les deux prémélanges.

4. Procédé suivant l'une quelconque des revendications 1 à 3, caractérisé en ce qu'on utilise un ciment hydraulique, de préférence du ciment Portland, comme additif capable de fixer de l'eau.

5. Procédé suivant l'une quelconque des revendications 1 à 4, caractérisé en ce qu'on utilise de la caséine comme fluidifiant.

6. Procédé suivant la revendication 4 ou 5, caractérisé en ce qu'on utilise comme prépolymère de polyisocyanate organique un prépolymère à base de polyéthers polyols et de diisocyanate de tolylène, la résine étant choisie de façon à conserver un rapport «NCO libre/ciment» compris dans la fourchette $0,05 \pm 0,015$.

7. Procédé suivant l'une quelconque des revendications 1 à 6, caractérisé en ce qu'on met en œuvre:
— 200 à 800 parties en poids de l'additif capable de fixer de l'eau, pour 100 parties en poids du prépolymère de polyisocyanate;
— 50 à 70 parties en poids d'eau pour 100 parties en poids de l'additif capable de fixer de l'eau;
— 0,10 à 0,50 partie en poids de fluidifiant pour 100 parties en poids du mélange formé par le prépolymère de polyisocyanate, l'additif capable de fixer de l'eau, le catalyseur, l'agent tensioactif, l'agent porogène, le fluidifiant et les charges minérales supplémentaires éventuelles;
—1 à 3 parties en poids d'agent tensioactif pour 100 parties en poids du dit mélange;
— 0,10 à 0,60 partie en poids de catalyseur pour 100 parties en poids du dit mélange;
— 2 à 5 parties en poids d'agent porogène pour 100 parties en poids du dit mélange.

8. Matériau cellulaire à basse masse volumique apparente, fabriqué suivant le procédé conforme à l'une quelconque des revendications 1 à 7.

9. Composition de matières pour l'obtention d'un matériau cellulaire au moyen du procédé selon l'une quelconque des revendications 1 à 7, comprenant au moins deux prémélanges de matières comprenant un prépolymère de polyisocyanate organique, un additif capable de fixer de l'eau, un catalyseur pour le prépolymère, un agent tensioactif, un agent porogène, éventuellement un fluidifiant et éventuellement des charges minérales supplémentaires, caractérisé en ce que l'additif capable de former l'eau, d'une part, et le prépolymère et le catalyseur, d'autre part, se trouvent dans des prémélanges différents.

**Patentansprüche**

1. Verfahren zur Herstellung eines zellularen Werkstoffes durch Reaktion eines organischen Polyisocyanatpräpolymers mit Wasser in Anwesenheit eines Wasser fixierenden Zusatzstoffes, eines Katalysators für das Präpolymer, eines oberflächenaktiven Mittels, eines Treibmittels, gegebenenfalls eines Verflüssigers und gegebenenfalls zusätzlicher Mineralfüllstoffe, ausgehend von einzelnen Vormischungen dieser Komponenten, dadurch gekennzeichnet, daß man zuerst wenigstens zwei Vormischungen herstellt, derart, daß das organische Polyisocyanatpräpolymer einerseits und der Wasser fixierende Zusatzstoff andererseits sich in verschiedenen Vormischungen befinden, wobei der Katalysator und das Präpolymer sich in derselben Vormischung befinden, und man dann das Wasser der Vormischung, die den Wasser fixierenden Zusatzstoff enthält, beimengt.

2. Verfahren nach Anspruch 1, dadurch gekennzeichnet, daß man zwei Vormischungen verwendet, von denen eine das organische Polyisocyanatpräpolymer, den Katalysator, das oberflächenaktive Mittel und das Treibmittel enthält und die andere den Wasser fixierenden Zusatzstoff, den etwaigen Verflüssiger und die etwaigen zusätzlichen Mineralfüllstoffe, und daß man die Beimengung des Wassers zu der Vormischung, die den Wasser fixierenden Zusatzstoff enthält, und die Zusammenführung der beiden Vormischungen im gleichen Augenblick und an dem für die Herstellung des zellularen Werkstoffes ausgewählten Ort durchführt.

3. Verfahren nach Anspruch 1 oder 2, dadurch gekennzeichnet, daß man zuerst getrennt einerseits eine erste Vormischung, die den Wasser fixierenden Zusatzstoff, den etwaigen Verflüssiger und die etwaigen zusätzlichen Mineralfüllstoffe enthält und andererseits eine zweite Vormischung, die das oberflächenaktive Mittel, das Treibmittel und das Polyisocyanatpräpolymer oder den Katalysator enthält, herstellt, man den Katalysator oder das Präpolymer zu der zweiten Vormischung zufügt, man das Wasser der ersten Vormischung zufügt, und man dann die beiden Vormischungen zusammenführt.

4. Verfahren nach einem der Ansprüche 1 bis 3, dadurch gekennzeichnet, daß man einen hydraulischen Zement, vorzugsweise Portlandzement als Wasser fixierenden Zusatzstoff verwendet.

5. Verfahren nach einem der Ansprüche 1 bis 4, dadurch gekennzeichnet, daß man Kasein als Verflüssiger verwendet.

6. Verfahren nach Anspruch 4 oder 5, dadurch gekennzeichnet, daß man als organisches Polyisocyanatpräpolymer ein Präpolymer auf der Basis von Polyolpolyethern und Toluoldiisocyanat verwendet, wobei das Harz so gewählt ist, daß ein Verhältnis «freies NCO/Zement» im Bereich von 0,05 ± 0,015 gewahrt wird.

7. Verfahren nach einem der Ansprüche 1 bis 6, dadurch gekennzeichnet, daß man
— 200 bis 800 Gewichtsteile des Wasser fixierenden Zusatzstoffes pro 100 Gewichtsteile des Polyisocyanatpräpolymers,
— 50 bis 70 Gewichtsteile Wasser pro 100 Gewichtsteile Wasser fixierenden Zusatzstoff,
— 0,10 bis 0,50 Gewichtsteile Verflüssiger pro 100 Gewichtsteile der aus dem Polyisocyanatpräpolymer, dem Wasser fixierenden Zusatzstoff, dem Katalysator, dem oberflächenaktiven Mittel, dem Treibmittel, dem Verflüssiger und den etwaigen zusätzlichen Mineralfüllstoffen hergestellten Mischung,
— 1 bis 3 Gewichsteile oberfächenaktives Mittel pro 100 Gewichtsteile der obengenannten Mischung,
— 0,10 bis 0,60 Gewichtsteile Katalysator pro 100 Gewichtsteile der obengenannten Mischung,
— 2 bis 5 Gewichsteile Treibmittel pro 100 Gewichtsteile der obengenannten Mischung
einsetzt.

8. Zellularer Werkstoff mit geringer scheinbarer Volumenmasse, hergestellt nach dem Verfahren gemäß einem der Ansprüche 1 bis 7.

9. Materialzusammensetzung zur Herstellung eines zellularen Werkstoffs mit Hilfe des Verfahrens gemäß einem der Ansprüche 1 bis 7, umfassend wenigstens zwei Materialvormischungen, umfassend ein organisches Polyisocyanatpräpolymer, einen Wasser fixierenden Zusatzstoff, einen Katalysator für das Präpolymer, ein oberflächenaktives Mittel, ein Treibmittel, gegebenenfalls einen Verflüssiger und gegebenenfalls zusätzliche Mineralfüllstoffe, dadurch gekennzeichnet, daß der Wasser fixierende Zusatzstoff einerseits und das Präpolymer und der Katalysator andererseits sich in verschiedenen Vormischungen befinden.

## Claims

1. Process for the manufacture of a cellular material by reaction of an organic polyisocyanate prepolymer with water in the presence of an additive capable of fixing water, a catalyst for the prepolymer, a surface-active agent, a blowing agent, optionally a liquefier and optionally additional inorganic fillers, starting with individual premixes of these constituents, characterized in that at least two premixes are produced first of all, such that, on the one hand, the organic polyisocyanate prepolymer and, on the other hand, the additive capable of fixing water are in different premixes, the catalyst and the prepolymer being in the same premix, water is then incorporated in the premix containing the additive capable of fixing water, and the premixes are then combined.

2. Process according to Claim 1, characterized in that two premixes are employed, one of which contains the organic polyisocyanate prepolymer, the catalyst, the surface-active agent and the blowing agent and the other of which contains the additive capable of fixing water, the optional liquefier and the optional additional inorganic fillers, and in that the addition of water to the premix containing the additive capable of fixing water and the combining of the two premixes are carried out at the time and in the place chosen for the production of the cellular material.

3. Process according to Claim 1 or 2, characterized in that there are first of all produced separately, on the one hand, a first premix containing the additive capable of fixing water, the optional liquefier and the optional additional inorganic fillers, and on the other hand, a second premix containing the surface-active agent, the blowing agent and the polyisocyanate prepolymer, or the catalyst, the catalyst or the prepolymer are added to the second premix, water is added to the first premix and the two premixes are then combined.

4. Process according to any one of Claims 1 to 3, characterized in that a hydraulic cement, preferably Portland cement, is employed as the additive capable of fixing water.

5. Process according to any one of Claims 1 to 4, characterized in that casein is employed as the liquefier.

6. Process according to Claim 4 or 5, characterized in that the organic polyisocyanate prepolymer employed is a prepolymer based on polyol polyethers and on tolylene diisocyanate, the resin being chosen so as to maintain a «free NCO/cement» ratio within the range of 0.05 ± 0.015.

7. Process according to any one of Claims 1 to 6, characterized in that the following are employed:
— 200 to 800 parts by weight of the additive capable of fixing water per 100 parts by weight of polyisocyanate prepolymer;
— 50 to 70 parts by weight of water per 100 parts by weight of the additive capable of fixing water;
— 0.10 to 0.50 parts by weight of liquefier per 100 parts by weight of the mixture consisting of the polyisocyanate prepolymer, the additive capable of fixing water, the catalyst, the surface-active agent, the blowing agent, the liquefier and the optional additional inorganic fillers;
— 1 to 3 parts by weight of surface-active agent per 100 parts by weight of the said mixture;
— 0.10 to 0.60 parts by weight of catalyst per 100 parts by weight of the said mixture; and
— 2 to 5 parts by weight of blowing agent per 100 parts by weight of the said mixture.

8. Cellular material of low apparent density, manufactured according to the process in accordance with any one of Claims 1 to 7.

9. Composition of matter for obtaining a cellular material by means of the process according to any one of Claims 1 to 7, comprising at least two premixes of substances comprising an organic polyisocyanate prepolymer, an additive capable of fixing water, a catalyst for the prepolymer, a surface-active agent, a blowing agent, optionally a liquefier and optionally additional inorganic fillers, characterized in that the additive capable of fixing water, on the one hand, and the prepolymer and the catalyst, on the other hand, are present in different premixes.